(19)

Europäisches
Patentamt
European
Patent Office
Office européen
des brevets

(11) **EP 3 381 738 A1**

(12) **EUROPEAN PATENT APPLICATION**
published in accordance with Art. 153(4) EPC

(43) Date of publication:
   **03.10.2018 Bulletin 2018/40**

(51) Int Cl.:
   **B60L 13/04** *(2006.01)*      **B61B 13/08** *(2006.01)*
   **H02N 15/00** *(2006.01)*

(21) Application number: **15909378.0**

(22) Date of filing: **27.11.2015**

(86) International application number:
   **PCT/RU2015/000828**

(87) International publication number:
   **WO 2017/091101 (01.06.2017 Gazette 2017/22)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **MA MD**

(71) Applicants:
   • **Joint Stock Company "d.v. Efremov Institute of
     Electrophysical Apparatus"
     St.Petersburg 196641 (RU)**
   • **Joint Stock Company "Science And Innovations"
     (Science and Innovation JSC")
     Moscow 119017 (RU)**

(72) Inventors:
   • **AMOSKOV, Viktor Mihaylovich
     St.Petersburg 197374 (RU)**
   • **ARSLANOVA, Dar'ya Nikolaevna
     St.Petersburg 192174 (RU)**
   • **BELOV, Aleksandr Vyacheslavovich
     P. Metallostroy
     St.Petersburg 196641 (RU)**
   • **BELYAKOV, Valeriy Arkad'evich
     P. Metallostroy
     St.Petersburg 196641 (RU)**
   • **VASIL'EV, Vyacheslav Nikolaevich
     St.Petersburg 191025 (RU)**
   • **KAPARKOVA, Marina Viktorovna
     P. Metallostroy
     St.Petersburg 196641 (RU)**

   • **KOROTKOV, Vladimir Aleksandrovich
     Kolpino
     St.Petersburg 196655 (RU)**
   • **KUKHTIN, Vladimir Petrovich
     Kolpino
     St.Petersburg 189630 (RU)**
   • **LAMZIN, Evgeniy Anatol'evich
     St.Petersburg 195279 (RU)**
   • **LARIONOV, Mihail Sergeevich
     Metallostroy
     St/ Petersburg 196641 (RU)**
   • **MIKHAYLOV, Valeriy Mikhaylovich
     Metallostroy
     St.Petersburg 196641 (RU)**
   • **NEZHENTSEV, Andrey Nikolaevich
     Metallostroy
     St.Petersburg 196641 (RU)**
   • **RODIN, Igor' Yur'evich
     Kolpino
     St.Petersburg 196653 (RU)**
   • **SYCHEVSKIY, Sergey Evgen'evich
     St.Petersburg 197101 (RU)**
   • **FILATOV, Oleg Gennadievich
     Metallostroy
     St.Petersburg 196641 (RU)**
   • **FIRSOV, Alexey Anatol'evich
     St.Petersburg 196641 (RU)**
   • **SHATIL', Nikolay Aleksandrovich
     St.Petersburg 192174 (RU)**

(74) Representative: **Friese Goeden Patentanwälte
   PartGmbB
   Widenmayerstraße 49
   80538 München (DE)**

(54) **ELECTROMAGNETIC DEVICE, GUIDEWAY, AND VEHICLE EQUIPPED WITH SAID DEVICE**

(57)    An electromagnetic device is disclosed comprising several windings arranged with a mutual offset in the longitudinal direction. Vector products of magnetic moments of adjacent windings are directed to the same side from the plane formed by the magnetic moments of any pair of adjacent windings. The technical result consists in creating a magnetic field predominantly on one side of the device.

Fig. 4

## Description

Field of invention

This invention relates to the field of electrophysics, electrical engineering, specifically to electromagnetic devices and, in some aspects, to transport systems in which electromagnetic devices are used in the form of an electromagnetic suspension.

Background of the invention

Patent CN202847462 presents a magnetic suspension of a vehicle, in which electromagnets are used. These electromagnets, as shown in Fig. 1 and 2b in patent CN202847462, are coils (windings) with U-shaped cores disposed therein along a line parallel to the underpass, to which the magnetic suspension is attracted (in the above-mentioned patent, this direction is horizontal in the illustrated construction, it coincides with the direction of the lines and/or the magnetic moment of the electromagnet). U-shaped cores are bent upward, towards the ferromagnetic guide (rail, beam), which is part of the underpass. The ferromagnetic guide also has protrusions (poles) directed toward the magnetic suspension poles formed by the bent ends of the cores of the electromagnets. The poles of the rail and magnetic suspension are arranged such that there is an air gap between them, through which the flux of the magnetic field closes, which ensures the attraction of the magnetic suspension to the underpass. The size of the gap between the poles is regulated by the electromagnetic force, which depends on the magnitude of the electric current flowing in the coil of the electromagnet.

To ensure the levitation of a vehicle weighing several tons or dozens of tons, a very strong magnetic field is required. Its concentration at the poles during motion will create strong eddy currents, which will heat the poles of the ferromagnetic guide and the cores of electromagnets to considerable temperatures. This leads to deterioration in the properties of the magnetic system, faster wear and tear of equipment, reduced service life and increased energy consumption. The level of the magnetic field in the gap is limited by the saturation degree of the core steel of the U-shaped magnet.

Summary

This invention is directed to eliminating the disadvantages of the prior art, in particular, to a more efficient distribution of the magnetic field, reduction in the scattering fields outside the working area and reduction in its interaction with cargo and passengers.

Further, we will use known definitions.

1) The expression $[\mathbf{a} \times \mathbf{b}]$ denotes the vector product of two vectors $\mathbf{a}=(a_x, a_y, a_z)$ и $\mathbf{b}=(b_x, b_y, b_z)$. Here and below, the vectors are highlighted in bold. The vector product $[\mathbf{a} \times \mathbf{b}]$ is the vector $\mathbf{c}=(c_x, c_y, c_z)$ whose components are $c_x=a_yb_z-a_zb_y$, $c_y=a_zb_x-a_xb_z$, $c_z=a_xb_y-a_yb_x$. The vector $\mathbf{c}$ is perpendicular to the plane in which vectors $\mathbf{a}$ and $\mathbf{b}$ lie.

2) The magnetic moment of the current-carrying coil of an electromagnet of arbitrary shape, $\mathbf{m}$, in the general case of volumetric conductors is equal to

$$\mathbf{m} = \frac{1}{2}\int_V [\mathbf{r} \times \mathbf{j}]dV \,,$$

where $V$ is the volume of the conductor, $dV$ is the volume element characterized by the radius vector $\mathbf{r}$, $\mathbf{j}$ is the electric current density vector. If the winding of the electromagnet is represented as a thin closed loop, then

$$\mathbf{m} = \frac{I}{2}\oint [\mathbf{r} \times \mathbf{dl}] \,,$$

where $I$ is the total current, $\mathbf{dl}$ is an element of the circuit. For plane circuits, the last expression gives $\mathbf{m} = I S \mathbf{n}$, where $S$ is the area, $\mathbf{n}$ is the unit vector of the normal to the plane of the circuit, directed in accordance with the screwdriver rule (if you rotate the handle of a screwdriver in the direction of the current, the direction of the magnetic moment will coincide with the direction of the translational movement of the screwdriver). The magnetic moment is a characteristic of the electromagnet (winding, coil) in the chosen coordinate system (I.E. Tamm "Fundamentals of the theory of electricity", M: Nauka, 1989).

3) The center of the electromagnet, $\mathbf{r_0}$, is defined as

$$\mathbf{r}_0 = L^{-1}\oint \mathbf{r}dl \,,$$

where $L$ is the total length of the winding circuit (including for multi-turn and / or multilayer winding), $dl$ is the element of the circuit. Where the circuit is symmetric, this definition coincides with the center of symmetry.

4) In general, the transverse plane of an electromagnet is a plane passing through its center perpendicular to the vector of the magnetic moment. If the electromagnet consists of one flat turn, the transverse plane coincides with the plane of the turn. If the coil is flat, the transverse plane coincides with the plane of the average coil.

5) The direction of the maximum asymmetry of the magnetic field is the direction along which the maximum difference of the magnitudes of the magnetic field module at the observation points located symmetrically on the different sides of the electromagnetic device should be provided. As for vehicles with magnetic suspension this direction is usually determined by gravity and coincides with the vertical axis of the vehicle, from this point onward, this direction is called vertical for the sake of brevity.

6) Horizontal plane is a plane orthogonal to the vertical direction.

7) The electromagnetic device consists of two, three, four or more electromagnets, the centers of which are displaced relative to each other in some direction (for brevity, hereinafter referred to as the longitudinal direction). The longitudinal direction can be calculated as a straight line in the horizontal plane that is least deviated from the centers of the electromagnets, for example, by the method of least squares (Linnik Yu.V., "The least squares method and the fundamentals of the mathematical-statistical theory of processing of observations." M., 1962). Electromagnets in the longitudinal direction form a sequence that makes it possible to define the concept of a "adjacent electromagnet." The extreme electromagnets have one neighbor, the others have two neighbors.

8) For definiteness, the following coordinate system is used further. Let's choose arbitrarily the origin O. From it, we draw the X axis in the longitudinal direction, and the Z axis in the vertical direction. The Y axis is directed perpendicular to the vertical XOZ plane. This notation is used in several of the drawings attached to This disclosure. In the event that the device or its components are oriented differently, it can be reduced to the accepted notation for axes and planes by turning (either real or imaginary) or the axes and planes can be reoriented. In the latter case, the characterizing names of the axes and planes, if they are used, can be changed (for example, the vertical plane may be horizontal if the device is rotated 90° around the longitudinal axis).

The object of the invention is solved by an electromagnetic device comprising (two or more) electric windings oriented relative to each other in such a way that the magnetic moments of the adjacent electrical windings are not colinear.

In a preferred embodiment, the device comprises at least three windings that are, mainly, installed, for example, in the longitudinal direction with mutual displacement relative to each other. The vector products of the magnetic moments of two adjacent windings in accordance with the invention are directed to the same side of the vertical plane (the vertical plane can be set, for example, by the magnetic moments of any pair of adjacent windings).

The radius of curvature of the inner turns of one or a number of windings in an advantageous embodiment is not less than 10%, 20%, 30%, 40%, or 50% of the characteristic size of the closed curve describing the inner turns of the winding. In the preferred embodiment, at least a part of the windings may have an elongated shape when projected onto a horizontal plane. In some embodiments, the windings of the device may be mechanically connected to each other in those sections that have the same directions of electric current.

The object of the invention is also solved by means of a underpass for a vehicle that is moved using magnetic levitation. Such a underpass may comprise at least one electromagnetic device according to any of the above described embodiments.

The object of the invention is also solved by means of a vehicle intended for traveling in the underpass using magnetic levitation. The vehicle must include a magnetic suspension comprising at least one electromagnetic device according to any of the above described embodiments. In addition, the underpass may comprise a ferromagnetic guide and / or a conductive surface for vehicles with electromagnetic suspension (EMS) or electrodynamic suspension (EDS), respectively.

With this invention, technical results are achieved such as the formation of a magnetic field over a given area, which provides that the electromagnetic device generates a magnetic field predominantly on one side of the device, and the entire magnetic field is, hence, used more efficiently and the scattering fields reduce in areas outside the working area. On top of that, the weight of the device is reduced. Besides, the device according to this invention makes it possible to create strong magnetic fields distributed over the area, and the device itself can have compact dimensions in the form of a flat structure of a minimum number of windings, i.e., without excessive communications leading to strong currents.

Brief description of the drawings

Fig. 1 illustrates an exemplary embodiment of a device of two electromagnets in accordance with this invention.
Fig. 2 illustrates the distribution of the magnetic field along two straight lines parallel to the axis OX and symmetrically located above and below the pair of electromagnets relative to the line of their centers.
Fig. 3 illustrates the distribution of the magnetic field along two parallel lines symmetrically located above and below the set of electromagnets relative to the line of their centers.
Fig. 4 illustrates a possible embodiment of an electromagnetic device consisting of three electromagnets in accordance with this invention.
Fig. 5 illustrates the distribution of the magnetic field along two parallel lines symmetrically located above and below the assembly of three electromagnets relative to the line of their centers.
Fig. 6 illustrates the distribution of the magnetic field along two parallel lines symmetrically located above and below a pair of adjacent assemblies of three electromagnets relative to the line of their centers.
Fig. 7 is a schematic side view of another possible embodiment of an electromagnetic device consisting of 5 windings in accordance with this invention.
Fig. 8 is a schematic side view of yet another possible embodiment of an electromagnetic device of nine windings in accordance with this invention.

Fig. 9 illustrates the distribution of the magnetic field along two parallel lines symmetrically located above and below the electromagnetic device consisting of six electromagnets relative to the line of their centers.

Fig. 10 illustrates the distribution of the magnetic field along two parallel lines symmetrically located above and below the electromagnetic device consisting of twelve electromagnets relative to the line of their centers.

Fig. 11 is a schematic side view of a possible embodiment of an electromagnetic device in accordance with this invention.

Fig. 12 illustrates the distribution of the magnetic field along two parallel lines symmetrically located above and below another electromagnetic device consisting of twelve electromagnets relative to the line of their centers.

Fig. 13 illustrates schematically a preferred embodiment of an electromagnetic device in accordance with this invention.

Fig. 14 is a sectional view of an exemplary embodiment of an electromagnetic device in accordance with this invention above a conductive surface.

Fig. 15 is a plan view of an exemplary embodiment of the electromagnetic device of this invention shown in Fig. 14 above the conductive surface.

Detailed description

The distribution of the magnetic suspension field with the structure depicted in patent CN202847462 can be provided, in particular, by increasing the cross-sectional area of the poles. This leads, however, to an increase in the material consumption for manufacturing the poles of the ferromagnetic guide and the core of the electromagnet, which also affects the weight of the magnetic suspension and the vehicle as a whole, which reduces the efficiency of the system.

To reduce the consumption of material on the poles of the core and the ferromagnetic guide, an additional coil (winding) of the electromagnet can be installed so that the magnetic moment or lines of the electromagnet are per se perpendicular to the ferromagnetic guide. In this case, on the one hand, the distribution of the magnetic field over an area not smaller than the area inside the coil of the electromagnet is ensured, and, on the other hand, the weight of the electromagnet not only does not increase, but even decreases. In addition, in some embodiments, the core can be eliminated from the electromagnet, since the coils of the electromagnets are normally located sufficiently close to the ferromagnetic guide to reduce the scattering of the magnetic field. It should also be noted that, with the location of the U-shaped electromagnet as specified in patent CN202847462, it becomes possible to use such a suspension not only in the EMS circuit (with attraction to the ferromagnetic guide), but also in the EDS circuit (with bouncing off from the conductive surface made of a non-magnetic electrically conductive material, for example, copper, aluminium, etc.) by re-arranging the poles of the U-shaped core downward. However, switching between circuits with EMS and EDS during the movement is impossible.

The disadvantage of the configuration of the patent CN202847462 is that the magnetic field on one side of the electromagnet does not participate in the interaction with the ferromagnetic guide (or conductive surface), which leads to an ineffective use of the energy of the electromagnetic field in the working area and the appearance of significant scattering fields in other regions outside the working area. This leads to the need to use an increased number of electromagnets or magnets of increased size and weight to form a magnetic field of the required value; this also leads to a decrease in the payload transported by the vehicle, wherein an electromagnet of such orientation is used to create levitation.

To more effectively use the energy of the magnetic field in the working area and to reduce the parasitic scattering fields in other areas outside the working area, it is possible to use the electromagnetic device (assembly of electromagnets with a "rotating" magnetic moment vector) in accordance with this invention.

The electromagnetic device of this invention is the assembly of three or more electromagnets in which the following conditions are met:

(1) The vectors of the magnetic moments of any pair of adjacent electromagnets are not colinear, that is, they are not parallel (otherwise, their vector product is not zero);
(2) The projections of the vectors of magnetic moments on the vertical plane XOZ of the sequence of electromagnets turns monotonically as the observation point moves from the center of one magnet to the center of the other in the same direction (clockwise or counterclockwise). And the angles of rotation are less than 180°. In other words, all vector products of the magnetic moments of two successive electromagnets are in one half-space with respect to the vertical plane XOZ (either in the half-space $Y > 0$ or $Y < 0$).

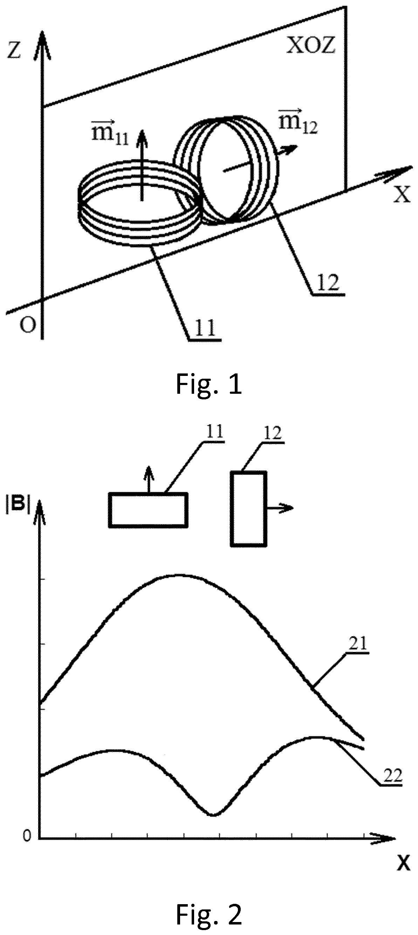

In the simplest embodiment shown in Fig. 1, the electromagnetic device comprises two electrical windings 11 and 12 arranged at an angle to each other (in Fig. 1, the winding planes are perpendicular to each other). The magnetic moments $m_{11}$ and $m_{12}$ of the windings 11 and 12, respectively, which, in the case of flat windings, are directed perpendicular to the planes of the windings, will also be perpendicular to each other, that is, not colinear. The magnetic field generated by such an electromagnetic device will be asymmetrical in the vertical plane relative to the longitudinal line passing through the windings (in the orientation of the device shown in Fig. 1, it will be parallel to the axis OX).

In the limiting case, the winding may consist of a single turn, but in a preferred embodiment, each winding included in the electromagnetic device of this invention comprises several turns typically, since this provides the optimum magnitude of the supply current.

The shape of a turn or the winding as a whole in the transverse plane can be any. However, in a preferential embodiment, the turns and windings are made in the shape of smooth lines that do not contain bends, since in the case of currents in the windings of large magnitude necessary for creating strong magnetic fields, the prerequisites for failure of windings will be created at the bends. In the embodiment shown in Fig. 1, the windings are made in the shape of round rings. In an preferred embodiment, the radii of curvature (rounding) of bends of the windings and turns in accordance with this invention have a value of at least 10%, 20%, 30% or 40% of the inner cross sectional dimension of the winding, and preferably not less than 50%.

In the device of Fig. 1, as well as in other Figures, the lead wires or conductors are not shown for the convenience of illustrating the invention. At the same time, it is necessary to take into account that the electromagnetic device according to this invention can perform its functions by passing an electric current through the windings (or in the presence of an electric current), which creates the necessary magnetic field. In this connection, when the device is implemented in practice, it will have connecting wires or conductors feeding electric current. The current can be fed to each winding separately, and in this case it is possible to change the current strength and/or direction in the windings individually, which gives flexibility in switching windings and the possibility of creating a variety of magnetic field configurations around the device, depending on the currents in the windings.

In other embodiments, the windings can be interconnected: either some of them or all. This reduces the number of current feeding wires, and simplifies the control of the configuration of the magnetic field created by the device. At the same time, this reduces the flexibility in providing various configurations of the magnetic field. For example, if all the windings are interconnected, i.e. the same current flows through all the windings, then the configuration of the magnetic field will preferably remain the same regardless of the current alterations, but only the magnetic field strength and/or its direction will change. In a compromise embodiment, the windings can be divided into winding complexes and interconnected within the complexes (i.e., the same current flows in one group of windings), and, by changing the currents in different winding complexes, it is possible to modify the configuration of the magnetic field. The winding groups described further may have winding interconnections within groups or between groups, or each winding can be commutated individually in each of the groups; thus, generally speaking, the winding and winding groups are different concepts, although in some cases they may coincide.

In accordance with this invention, the electromagnetic device is intended to form a magnetic field interacting with an object that is external to the electromagnetic device. This means that the object with which the electromagnetic device interacts is not covered by the device. In other words, the object, for magnetic interaction with which an electromagnetic device is intended, finds itself outside the space limited by any rectilinearly connected end points, lines, or surfaces.

In addition, the electromagnetic device according to this invention creates a magnetic field, preferably formed only on one side. This makes it possible to enhance the magnetic interaction with the same values of weight and/or current. Accordingly, the object, for interaction with which the electromagnetic device is intended, is predominantly located on the side where the magnetic field is formed (preferably the largest one by its value).

The results of mathematical modeling of the magnetic field of such a device are shown in Fig. 2. On all diagrams, the absolute value (modulus) of the magnetic induction vector B is used as the magnitude of the magnetic field, and the arrangement of the windings corresponding to the shown distribution is shown above the diagrams, in which the distribution of the absolute magnitude of the magnetic field along the OX axis is given. In particular, in Fig. 2, the windings 11 and 12 are shown above the diagram. It can be seen from the diagram that the line 21 is located above the line 22 throughout the entire diagram. This means that the field around the device described above will always be larger in absolute magnitude on top of that than in the bottom.

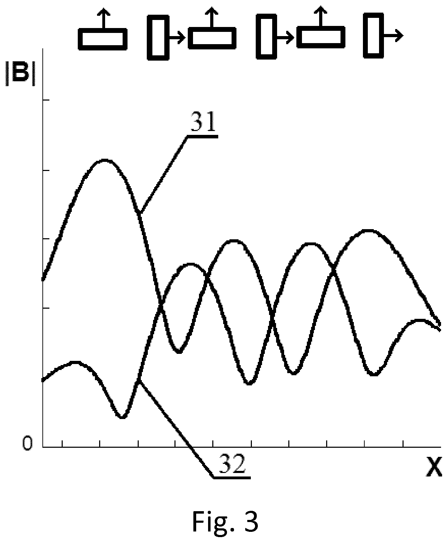

In the event that several winding assemblies shown in Fig. 1 are placed adjacent to the offset in the longitudinal direction (those coinciding with the axis OX in Figures) as shown in the upper part of Fig. 3 (side view of the assembly), the magnitude of the magnetic field will be distributed along this longitudinal direction, as shown in the diagram of Fig. 3 under the conditional depiction of the assembly for which the calculation was made (assembly and diagram are shown appropriately scaled and positioned). The ratio of curve 31, which displays the magnitude of the magnetic field on top of the assembly, and curve 32, which displays the magnitude of the magnetic field in the bottom of the assembly, shows that the asymmetry of the magnetic field will be observed at the assembly edges, and in the middle part, on the average, there is no asymmetry of the magnetic field, since in some sections of the assembly, the field value from above is larger than the field value from below, and in some section on the contrary.

Thus, each electromagnetic device (a pair of electromagnets with different orientations), represented in Fig. 2, provide, in isolation from one another, the asymmetry of the magnetic field. But, when installed next to the offset in the longitudinal direction, they do not provide. In this connection, in those applications where the asymmetry of the magnetic field is required, such devices can be used when they are installed at such a distance from each other, at which the magnetic fields of adjacent assemblies will not exert a significant influence, and asymmetry of the magnetic field will be observed near the assemblies. The distances, at which the magnetic field falls to insignificant values, can be one or more (2,3,4,5,7,10) linear dimensions of the windings of the device (for example, its cross sectional dimension).

However, in those applications where it is required to provide a strong magnetic field with asymmetry in the vertical direction over a considerable length in the longitudinal direction (area), the device schematically represented in Fig. 3 above the diagram, can not be applied. Therefore, as it is required to spread the devices shown in Fig. 1, by the distance between them, the efficiency of the device can be insufficient. This problem can be solved by using another electromagnetic device. In this device, the windings are arranged in such a manner as to provide an asymmetric magnetic field over a fairly long length in the longitudinal direction or area, including by placing several additionally proposed devices side by side.

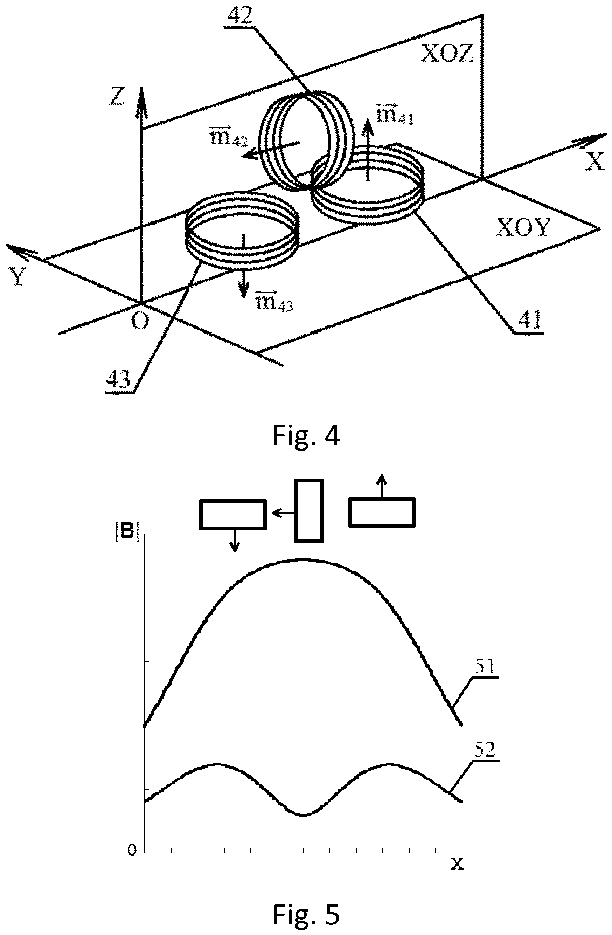

One such possible embodiment of the electromagnetic device according to this invention is shown in Fig. 4. The assembly comprises at least three windings 41, 42 and 43. The transverse planes of the adjacent windings are pairs of windings, such as 41 and 42, and 42 and 43 are mutually angled (i.e., they are not in the same plane, are not colinear, in other words, the angles between the transverse planes of the windings are greater than 0° and less than 180°, for example, from 1° to 179°). Those windings that are not adjacent, i.e., they are separated (for example, when one of the windings is turned to the place of the other winding), by at least one intermediate winding, may lie in the same plane, that is, the angles between the transverse planes of such windings may have a value 0° or 180°, although this is not necessary. For example, windings 41 and 43 in Fig. 4 are not adjacent, because the winding 42 separates them. The transition from the winding 41 to the winding 42 is effected by rotating the winding 41 (its transverse plane, in which the turns lie) by an angle of 90°; similarly, a transition from winding 42 to winding 43 occurs. At the same time, windings 41 and 43 can be in the same plane (in Fig. 4, it is parallel to the horizontal (longitudinal) XOY plane). All the windings 41-43 (their transverse planes, where windings are located) in Fig. 4 are perpendicular to the vertical XOZ plane.

In order for the electromagnetic device to create a magnetic field predominantly on one side, the windings of the device should be arranged in such a manner as to be energize so that the results of the vector products of the magnetic moments of the adjacent windings are directed to the same side from the plane formed by a pair (or, in some cases, any pair) of magnetic moments of the windings that make up the electromagnetic device. In other words, the results of vector products of magnetic moments of adjacent windings are in the same half-space obtained by dividing the space by a plane composed of some pair of magnetic moments of the windings that make up the electromagnetic device.

It is necessary to take into account the fact that the direction of the vector product is critical for this invention, not its length. In this connection, in a simplified method to determine the direction of the vector product, it can be sufficient to construct a vector that creates a right-handed triplet of vectors with magnetic moments of adjacent windings: in accordance with this invention, two such constructed vector products for two or more pairs of magnetic moments of adjacent windings must be directed (located) on one side of the plane, constructed by one pair of magnetic moments of adjacent windings (or on one side of several such planes, constructed by pairs of magnetic moments of adjacent windings).

In addition, it is possible to determine the necessary directions of the magnetic moments of the windings without determining the vector product and constructing an additional vector. To do this, a plane is created by two magnetic moments and then, when the electromagnetic device is observed from the same side of this plane (from the same half-space, into which the plane divides the spaces), the shortest rotation of the magnetic moments of the windings that make up the device is always performed either counterclockwise, or clockwise. For example, in Fig. 1, the magnetic moments $m_{41}$, $m_{42}$ and $m_{43}$ of the windings 41-43 form a vertical plane XOZ plane in Fig.1. When observing windings 41-43 from the nearest side of the XOZ plane (along the OY axis from the point O in the direction along the arrow Y, that is, from where we look at the Figure), the shortest rotation of the magnetic moment $m_{41}$ to the moment $m_{42}$ is performed counterclockwise, quite like the shortest rotation of the magnetic moment $m_{42}$ to the moment $m_{43}$: this means that the windings 41-43 (assembly of these windings) make up the electromagnetic device in accordance with this invention.

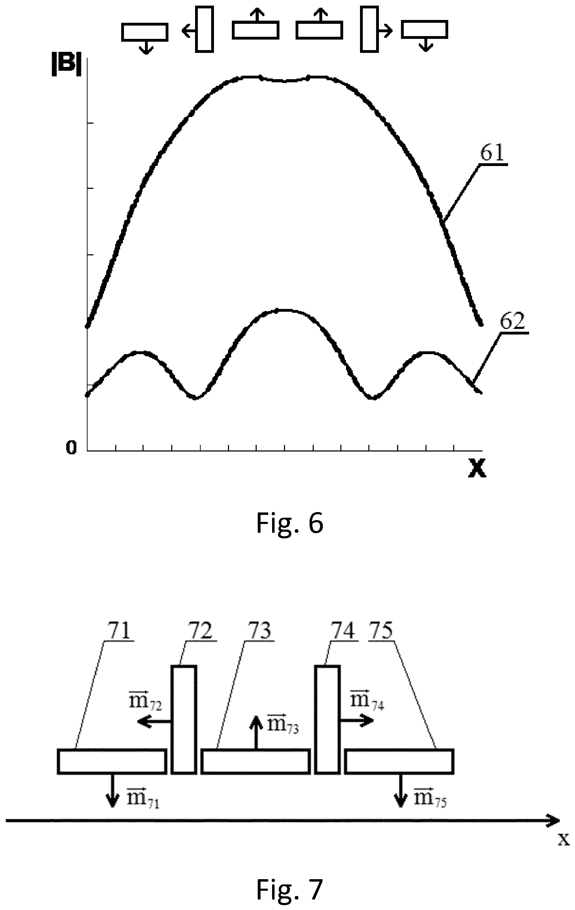

The adjacency of the windings is determined by their arrangement in the assembly of the windings making up the device. For a given winding, the adjacent winding will be the winding that is closest to the given winding on either side of the transverse plane perpendicular to the magnetic moment of the winding. Thus, a given winding can have no more than two adjacent windings. For example, windings 41 and 42 are considered to be adjacent windings, quite like windings 42 and 43 in Fig. 4. Fig. 7, windings 71 and 72, 72 and 73, 73 and 74, 74 and 75 are adjacent. The transition between the adjacent windings (between its transverse planes) is predominantly accomplished through its turning by an angle of, preferably, no more than 135° and its offset in the direction of the magnetic moment. In the event that the nearest winding is in a direction transverse to the direction of the magnetic moment, such a winding can not be, most of all, regarded as adjacent. For example, in Fig. 4, windings 41 and 43 are not adjacent (as they lie in the same plane, the vector product of its parallel (colinear) magnetic moments is zero, and the direction of the zero vector is undetermined), and in Fig. 7, windings 71, 73 and 75, as well as windings 72 and 74, windings 72 and 75 and windings 71 and 74.

Another method of determining the adjacency of the windings can also be proposed. Since the electromagnetic device of this invention is designed to form a magnetic field interacting with an object outside the device, a longitudinal direction, predominantly running along the object with which the device is to interact, can be specified for the electromagnetic device (it can still be called the assembly of windings, coils or electromagnets). In the figures, such a longitudinal direction is set by the OX axis (where it is shown). Accordingly, the windings of the device will be arranged with mutual offset in the longitudinal direction.

The offset of the windings can be determined using different points. In a preferred embodiment, the offset is determined by the position, for example, of the geometric centers of the windings (electromagnets, coils). Geometric centers can be considered, in particular, as points of symmetry, if the windings are made in the form of symmetrical products, or as equidistant points or averagely equidistant points from the extreme points and/or surfaces of the windings. At the same time, the offset in the longitudinal direction does not mean that these electromagnets can not be installed with an offset in other directions. The longitudinal direction may also be the direction, relative to which the windings are offset and the angles between the magnetic moments of the windings determined relative to the longitudinal direction are consistent with this invention.

In such a case, adjacent windings are a pair of such windings that are offset relative to the longitudinal direction by the shortest distance in any direction along the longitudinal direction relative to the specified winding. For example, if the position of the winding is determined by its geometric center, then the projections of the geometric points of the other windings do not lie between the projections of the geometric points of adjacent windings on the longitudinal direction.

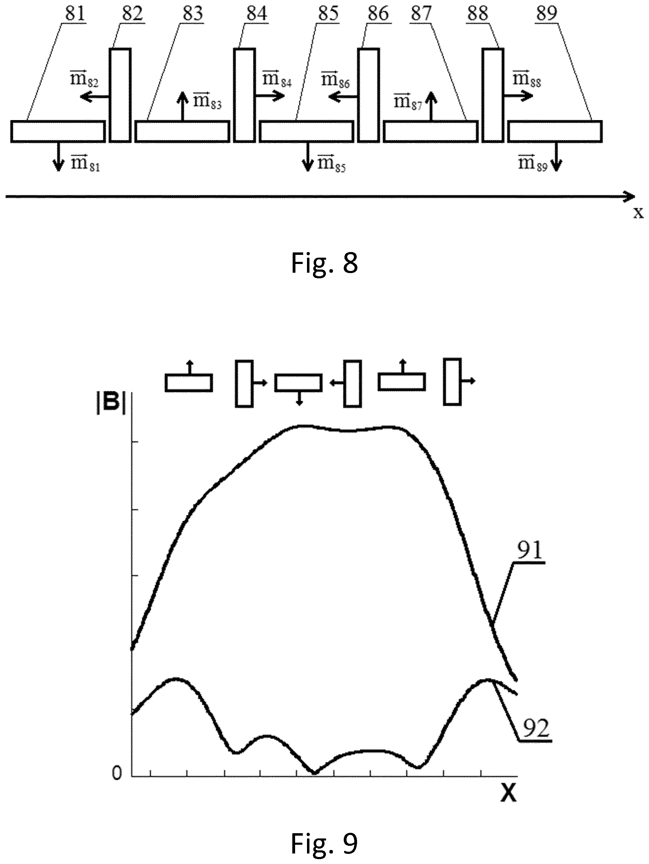

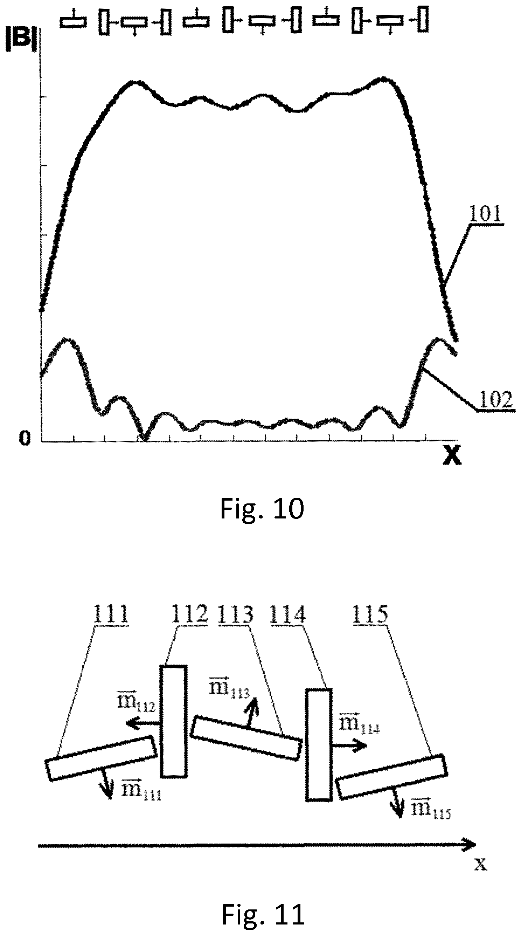

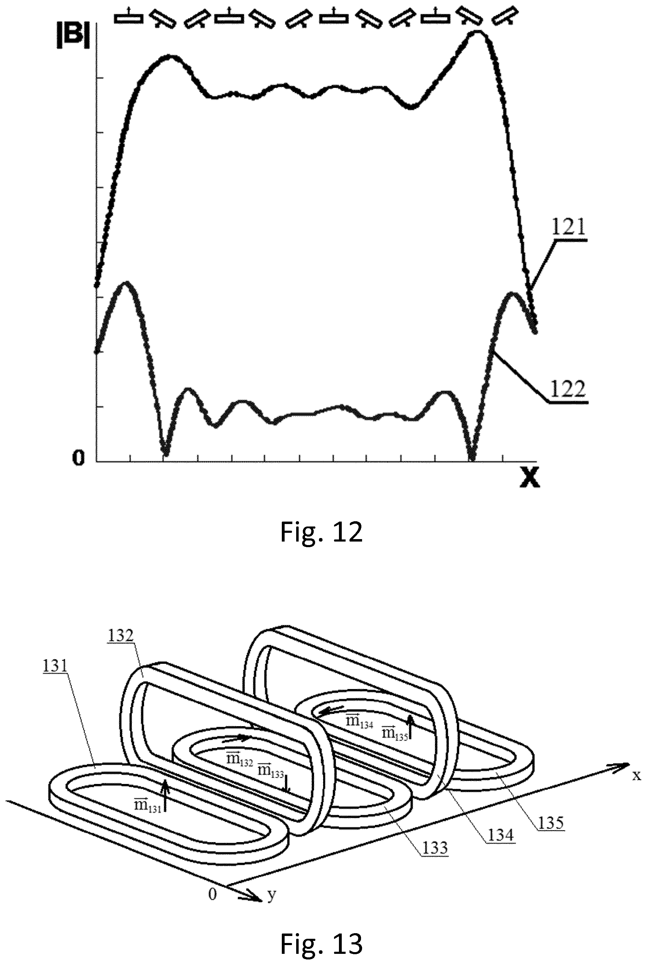

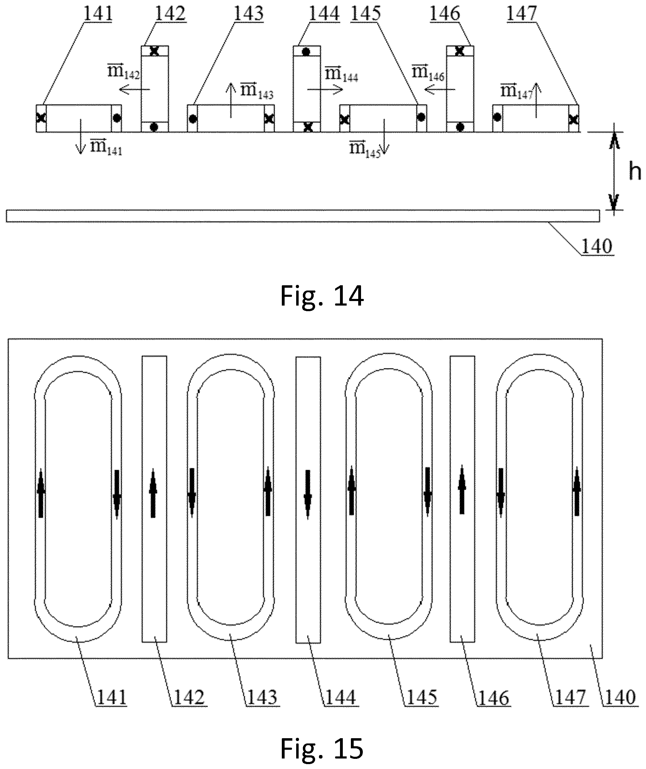

The windings of the assembly can be aggregated into two groups of windings. The first group of windings is located in a plane predominantly parallel to the object, for interaction with which a magnetic field is created (for example, a ferromagnetic guide or a conducting surface). Fig. 4, these are windings 41 and 43, in Fig. 7, these are windings 71, 73, 75, in Fig 8, these are windings 81,83,85,87,89, in Fig 11, these are windings 111,113,115, in Fig. 13, these are windings 131,133,135; in Fig. 14 and 15, these are windings 141, 143, 145, 147 (also, in Figs. 14 and 15, the conductive surface 140 is shown). Windings of the first group, located side by side (but not adjacent in the above sense, since the adjacent windings can be only windings of different winding groups), feature predominantly oppositely directed magnetic moments (in Fig. 6, the windings in the center have the like-directed moments, but these windings belong to different devices located in series). That is, the magnetic field formed by one winding of the first group is directed to the side opposite to the direction in which the magnetic field generated by the winding of the first adjacently located group that is a part of the same device is directed.

With this arrangement of the windings, the fields formed in both directions will be partly closed to each other, and partly dissipated. In order to eliminate the dissipation and ensure the formation of a magnetic field only on one side, two (depending on the configuration, however, division into three or more is possible) groups of windings are mainly used in the assembly (in the smallest embodiment, when the assembly comprises only three windings, the second winding group can be represented by a single winding, for example, winding 42 in Fig. 4). Fig. 7, the second group includes windings 72, 74, in Fig. 8, windings 82,84,86,88; in Fig. 11, windings 112,114; in Fig. 13, windings 132,134; in Fig. 14 and 15, windings 142,144,146. The windings of the second group are oriented predominantly transversely (or perpendicularly) to the windings of the first group, so that the magnetic moment is predominantly parallel to the object to which the magnetic field (for example, the ferromagnetic guide or the conductive surface) is directed. The windings of the second group are located between the windings of the first group or next to them, mainly, predominantly near the nearest parts of the windings of the electromagnets of the first group, so that the magnetic moment of the windings of the second group is directed from one winding of the first group to the other (adjacent) winding of the first group. The magnetic moments of the windings of the second group are directed oppositely, that is, towards each other or from each other.

At each point, the magnetic fields of different windings are added together in vector form. Since the magnetic field is formed by all the windings, the resultant magnetic field will be composed of both fields formed by windings located in a plane or at a slight angle to a plane parallel to the object for interaction with which an electromagnetic device is intended, and from fields formed by windings located perpendicularly or windings deviated somewhat from the perpendicular direction to the mentioned plane, and, thus, the contribution to the formation of the magnetic field is made by all elements (windings), which are part of the electromagnetic device. Besides, with such an arrangement of the windings in the assembly, the total magnetic field will be directed predominantly to one side of the electromagnetic device, to the object with which magnetic interaction is provided (in Figures, this is a downward direction). In this way, a high efficiency of the device according to this invention is achieved, which can be defined as the ratio of the magnitude of the generated magnetic field to the weight of the device.

The total magnetic field can be used, for example, to create levitation by attracting to the ferromagnetic guide or repelling from the conductive surface. Due to the presence of windings (electromagnets) of the second group, which turn the field of the first winding group (electromagnets) from one side and guide it to the other side, the entire magnetic field created by the windings (electromagnets) of both the first group and the second group will practically interact with the ferromagnetic guide or the conductive surface, that is, all the windings (electromagnets) of the assembly. On the other side of the electromagnetic device (assembly of electromagnets or windings), opposite to the location of the ferromagnetic guide or conductive surface, the magnetic field is absent or its magnitude is negligible.

In order for the assembly of the windings located with mutual offset in the longitudinal direction to create a magnetic field directed only to one side from the windings, the magnetic moments of the windings must form angles with the same sign in the adjacent pairs of windings. The adjacency of the windings is determined not by groups, but by the transition in the assembly from a winding to a winding in the longitudinal direction. The sign of the angle (plus or minus) is determined when compared with the longitudinal direction OX and/or the vertical plane XOZ (with the arrangement shown in Fig. 4). If the angle in the transition from the first vector to the second one is counted counterclockwise, this can be taken as a positive value of the angle, and if clockwise, then as a negative angle value (inverse definitions can be accepted, but once having made a decision on the method of determining the sign of the angle, this method should be adhered constantly). When moving from one winding in the assembly to another in the direction opposite to the longitudinal direction, the angles change their sign. In the case of winding assemblies or electromagnets of this invention, the angles are changed in the same manner for all pairs of vectors of adjacent windings (electromagnets).

Fig. 5 shows a diagram of the distribution of the magnetic field from above (line 51) and from below (line 52) created by the winding assembly (their respective arrangement is shown schematically (as a side view) above the diagram). One can see that the asymmetry of the magnetic field is observed throughout the electromagnetic device thus obtained, that is, the value 51 of the field from above is always larger than the value 52 of the field from below, and its ratio reaches values greater than 6 in some positions. Fig. 6 illustrates the distribution of the field for the case when two devices are mounted side by side with a longitudinal offset (in a mirror image) similar to those shown in Fig. 4. Two windings in the center refer to different devices, that is, they are not parts of the same device. It is obvious that the asymmetry of the field is maintained throughout the entire length of such an electromagnetic device made up of two devices.

When the observation point passes from one winding to another one along the longitudinal direction, as can be seen, for example, in Fig. 7 or 8, a turn (rotation) of the magnetic moment in the vertical plane is observed, which includes a vector defining the longitudinal direction. This turn is made in the same direction (clockwise or counterclockwise). For example, in Fig. 7, when passing from winding 71 to winding 75 sequentially through windings 72-74, the magnetic moments $m_{71}$-$m_{75}$ a kind of rotate clockwise. Similarly, in Fig. 8, in the case of a sequential transition through windings 81-89, the mag-

netic moments $m_{81}$-$m_{89}$ also a sort of rotate clockwise. The magnitude of the angle to which the rotation occurs (i.e., the angle between the vectors) can have various values, for example, from 45° to 135°, it can vary from one pair of windings to another one, or remain constant. In a preferred embodiment, the magnetic moments of the adjacent windings form an angle of 90° between each other for each adjacent pair of windings in the assembly, as shown in Fig. 4, 7,8, 13-15.

As noted above, the mutual orientation of the magnetic moments of the windings (electromagnets) can also be determined through the vector product. The result of the vector product of the magnetic moments of two adjacent windings (those windings, one of which relates to the first group, and the other one relates to the second), which is also a vector for all such winding assembly pairs directed to the same direction relative to the vertical plane XOZ in Fig. 4. As already noted, the vertical plane contains a longitudinal direction, while the magnetic moments either belong to the plane, or are parallel to it, or slightly deviate from it; in any of these embodiments, the magnetic moments have non-zero projections onto the vertical plane. Thus, a plurality of vertical planes can be defined to assemble the windings in accordance with this invention. In a preferred embodiment, the longitudinal plane is considered to be the plane, the projections of the magnetic moments of the windings on which have the maximum or average maximum value. As already noted, in Fig. 4, a plane formed by a pair of magnetic moments of a pair of adjacent windings (electromagnets) can be accepted as such a vertical plane XOZ, for example, the plane formed by windings 41 and 42, or 42 and 43.

Although This invention also relates to a device consisting of two or three windings (electromagnets, coils), as shown in Fig. 1 and 4, assemblies of four, five or more windings are used in preferred embodiments. For example, in Fig. 7, 11 and 13, devices with five windings are shown, Fig. 9 illustrates a diagram for 6 windings; Fig. 14, 15 shows a device with seven windings, Fig. 8 shows a device with nine windings, and Fig. 10 and 12 are diagrams for devices consisting of twelve windings. In such assemblies, the geometric center of the at least one winding of the first group is located between the geometric centers of the windings of the second group along the longitudinal direction, and the geometric center of the at least one winding of the second assembly group is located between the geometric centers of the windings of the first assembly group along the longitudinal direction (in an assembly consisting of three windings, the second group of windings consists of (is replaced with) a single winding. In a preferential embodiment, at least one winding of the first group is located between the windings of the second group along the longitudinal direction, and at least one winding of the second group is located between the windings of the first group along the longitudinal direction. In one applicable embodiment, the device can comprise seven, eight, nine, ten or more windings, arranged in accordance with this invention along the longitudinal direction parallel to a lengthy object, along which an electromagnetic device travels (e.g., a ferromagnetic guide or conductive surface to provide magnetic levitation).

Fig. 7 shows that the magnetic field produced by winding 73 (the magnetic moment $\mathbf{m_{73}}$ pointing upwards) is divided with windings 72 and 74 (each of the magnetic moments of $\mathbf{m_{72}}$ and $\mathbf{m_{74}}$ is directed from winding 73 and in opposite directions relative to each other) into two parts, which are captured by windings 71 and 75 (the magnetic moments $\mathbf{m_{71}}$ and $\mathbf{m_{75}}$ are directed downwards). Also, it can be said that the magnetic field in the winding 73 is summed up on both sides, that is, from the windings 71, 72 and 74, 75. In either case, the magnetic field will be stronger in the winding 73 than in the windings 71 and 75. This means that the magnetic field distribution of the device shown in Fig. 7 and comprising five windings will be uneven.

In order to eliminate such unevenness of the field, the device according to this invention can use a larger number of windings (odd, preferably), for example, seven windings, as shown in Fig. 7 and 8, nine windings, as shown in Fig. 8, or even more. Fig. 8, the magnetic field of the winding 83 will be larger in absolute magnitude to the magnetic field of the winding 81, since in accordance with the magnetic moments $\mathbf{m_{81}}$, $\mathbf{m_{82}}$, $\mathbf{m_{83}}$, $\mathbf{m_{84}}$, and $\mathbf{m_{85}}$, the magnetic field of the winding 83 is divided into two streams by windings 82 and 84, which further enter the windings 81 and 85 (similar to windings 71, 72, 73 and 74 in Fig. 7). At the same time, the magnetic field of the winding 85 will be equal in absolute magnitude to the magnetic field of the winding 83 and the winding 87, since in accordance with the magnetic moments $\mathbf{m_{83}}$, $\mathbf{m_{84}}$, $\mathbf{m_{85}}$, $\mathbf{m_{86}}$, and $\mathbf{m_{87}}$, the magnetic field of the winding 85 is divided into two streams by windings 84 and 86, which further enter the windings 83 and 87. The magnetic field of the winding 87 in accordance with the magnetic moments $\mathbf{m_{85}}$, $\mathbf{m_{86}}$, $\mathbf{m_{87}}$, $\mathbf{m_{88}}$, and $\mathbf{m_{89}}$ is also divided into two streams by windings 86 and 88, which further enter the windings 85 and 89, therefore, the magnetic fields of the windings 83, 85 and 87 will be equal in strength. Since the fields of the windings 81 and 89 are not distributed into streams, but pass fully through the windings 82 and 88 to the fields of windings 83 and 87, respectively, the magnetic fields of the windings 81 and 89 will differ from the magnetic fields of the windings 83, 85 and 87 in strength, thereby edge effects appear. Thus, the more windings in one electromagnetic device (in one winding assembly) in accordance with this invention, the bigger the length of the device, along which uniform magnetic field can be obtained.

Fig. 9 and 10 show the results of calculations of magnetic fields for the assembly of 6 windings and 12 windings, respectively (they are shown above the corresponding diagram). Adjacent windings for both diagrams are located at an angle of 90°, and the vector products of the magnetic moments of adjacent windings are directed to the same half-space, obtained by dividing a shared space by a plane determined by the magnetic moments of adjacent windings. Fig. 9, line 91 and in Fig. 10, line 101, which characterize the magnetic field values above the devices, are always greater than line 92 and line 102, respectively, which characterize the magnetic field values below the device, which reflects a stable asymmetry of the magnetic field throughout the devices.

The technical result of this invention will be achieved not only in the case where all magnetic moments are predominantly in the vertical plane, but also where they deviate from it, still their projections onto the plane are not zero. Therefore, for convenience in determining the use of the invention, it can be postulated that the magnetic moments of the electromagnets form, with a vertical plane, angles either from 0° with deviations of up to ±45°, or 180° with deviations up to ±45°: that is, vectors can be angled from the plane in the absolute value up to 45°. In general, the technical result will also be achieved at angles larger in absolute value than 45°, but the result itself will have a smaller value, that is, such an electromagnetic device will perform its functions less efficiently. Here and in the description as a whole, the geometrical arrangement of directions and planes is specified only for convenience of conformity with the depictions in the drawings and does not pursue restrictive purposes: that is, in practice, depending on the arrangement of the assembly, these planes and directions can be located in other directions.

In particular, the magnetic fields will have significant values in both half-planes obtained by dividing the vertical plane by a line passing through one of the centers of the windings in the longitudinal direction (or by the horizontal plane, in which the windings of the first group lie and which is parallel to the XOZ plane in Fig. 1 and 4, or the plane formed by the axes OX and OY in Fig. 13), while in the preferred embodiment, where the magnetic moments lie in the vertical plane or are parallel to it, the magnetic field will be concentrated mainly in one of these half-planes (top or bottom), while in another plane, it will be negligible. Since the main technical result of this invention is, however, to ensure the asymmetry of the distributed magnetic field, if angles of magnetic moments with a longitudinal plane have an absolute value greater than 45°, but an appreciable and sufficient asymmetry of the magnetic field will be achieved (for example, 2 times, 1.5 times, etc.), the invention should be considered as used.

A similar approach should be used to determine the angle with the longitudinal direction. In a preferential embodiment, the magnetic moments of the first group of windings of the device (assembly), as shown in Fig. 4, 7, 8, 13-15 form angles of 90° or -90° with the longitudinal direction, that is, they are perpendicular to it (the projections of the vectors on the direction are zero, more precisely, they are points), and the magnetic moments of the second group of windings of the device (assembly) form angles of 0° or 180° with the longitudinal direction, that is, they coincide with it, are parallel, or anti-parallel to it (the projections of the vectors on the direction have maximal values coinciding with the vectors themselves). The technical result of this invention will, however, be achieved also in those cases where the magnetic moments of the windings are not only perpendicular, parallel, or anti-parallel to the longitudinal direction, but also form angles with the longitudinal direction different from those indicated. Such a case is shown in Fig. 11. In such cases, the projections of the magnetic moments $m_{111}$, $m_{113}$, and $m_{115}$ of the first group of windings 111,113,114 on the longitudinal direction can have a relatively small value, and the projections of the magnetic moments $m_{112}$ and $m_{113}$ of the second group of windings 112 and 114 on the longitudinal direction can have a value slightly different from the lengths of the vectors themselves (in Fig. 11, they correspond to the windings 112 and 114, which are mounted vertically). Thus, for an electromagnetic device in accordance with this invention, a plurality of longitudinal directions can be determined; in the preferred embodiment, the direction, projections of the magnetic moments of the windings of the first group to which have minimum or average minimum values and projections of the magnetic moments of the windings of the second group to which have maximum or average maximum values, is assumed to be the longitudinal direction.

Fig. 12 illustrates the result of simulating a magnetic field for a device consisting of twelve windings, four of which are arranged horizontally, and the rest are diverted at an angle of + 120° or -120° with respect to the longitudinal direction (an example of arrangement is shown above the diagram). The "rotation" of the magnetic moment in the device occurs counterclockwise every time by 120°. That is, the angle between the magnetic moments of the adjacent windings is 120° (or -120°, if counted in the opposite direction). As a result, vector products of magnetic moments of adjacent windings will be directed to the same side (half-space) from the plane formed by a pair of magnetic moments of adjacent windings. The calculations show that the magnetic field of such a device also features asymmetry, as can be seen from the fact that the value 121 of the field on the top is always greater than the value 122 of the field in the bottom throughout the device.

In view of the fact that the technical result of this invention will be achieved even where the magnetic moments of the windings form angles different from 90° or -90° and 0° or 180° with the longitudinal direction, for convenience of determining the use of the invention, it can be determined that the magnetic moments of the first group of windings form angles of either 90° with a longitudinal direction with deviations up to ±45°, or -90° with deviations up to ±45°, and the magnetic moments of the second group of windings form angles of either 0° with deviations up to ±45°, or 180° with a deflection up to ±45° with the longitudinal direction. That is, the magnetic moments of the first group of windings can form angles in the absolute value up to 45° with directions perpendicular to the longitudinal direction. At the same time, the magnetic moments of the second group of windings can form the angles in the absolute value up to 45° with longitudinal direction. In general, the technical result will also be achieved at angles larger in absolute value than 45°, but the result itself will have a smaller value, that is, such an electromagnetic device will perform its functions less efficiently. In particular, the magnetic fields can have appreciable values in both half-planes obtained by dividing the vertical plane by a line passing through one of the centers of the electromagnets in the longitudinal direction (or by the horizontal plane XOY in Fig. 4, in parallel to which the windings of the first group lie), while in a preferred embodiment, where the magnetic moments lie in the longitudinal plane or are parallel to it, the magnetic field will be concentrated mainly in one of these half-planes, while in another plane, it will be negligible. Also, in a device implemented with deviations in orientation greater than as indicated, magnetic fields can feature inhomogeneous or varied field structure. Since the main technical result of this invention is, however, to ensure the asymmetry of the distributed magnetic field, if specified angle have an absolute value greater than 45°, but an appreciable and sufficient asymmetry of the magnetic field will be achieved (for example, 2 times, 1.5 times, etc.), the invention should be considered as used.

The described electromagnetic devices, which are assemblies of windings (electromagnets), allow creating a magnetic field only on one side of the device (or, in other words, with asymmetry of the magnetic field), while providing a distributed magnetic field, the value of which can be corrected by changing the electric current passed through windings. By varying the direction of the current in the windings of one of the groups of windings (electromagnets), it is also possible to change the side in which magnetic field is created without mechanical offsets or rotations.

In addition to the fact that the magnetic field is distributed at least over the area inside the winding (there may be no core, which reduces weight and reduces the cost of the assembly as a whole due to the absence of consumption by the core material, for example, iron or steel, and restrictions on the level of the magnetic field imposed by the degree of saturation of the steel or ferromagnetic material of the core are removed), it is also distributed in the longitudinal direction due to several windings of the first group located along this direction. In order for the field to be distributed also in the direction transverse to the longitudinal one and which is lying in the plane, where the electromagnets of the first group are located (in Fig. 4, parallel to the horizontal plane XOY), it is possible to arrange several rows of such assemblies of windings side by side. This configuration can, however, create additional difficulties with the switching of the lead wires/cables. Also, in the case of round electromagnets (windings), as shown in Fig. 1 and 4, loose packaging will be observed, while the use of square, rectangular, rhombic electromagnets (windings) or other shapes with significant bends limits the magnitude of the magnetic fields that can be formed by these electromagnets (windings), since the bends of the wire, from which the windings are made, on the corners of square electromagnets are subject to the effect of cross sectional flattening, which can lead to the destruction or increased electrical impedance of the winding.

In order to eliminate the need for multiple parallel windings assemblies in accordance with the invention and to avoid switching and wiring problems in current-feeding lines and to enable the creation of strong magnetic fields, at least, some of the windings of the device can feature elongated shape in transverse direction along the axis OY, perpendicular to the vertical plane XOZ in Fig. 4. Fig. 13, this direction corresponds to the axis OY, along which the windings 131-135 are stretched (the shown form of the windings is usually called a race tracking form). At the edges of such elongated electromagnets, windings can have a rounded shape, as a result of which there are no kinks in the windings of such electromagnets and it is possible to easily pass large currents that can form strong magnetic fields distributed in the assembly over the area.

As shown in Fig. 6, in the electromagnetic device with such elongated windings 131-135, the magnetic moments $m_{131}$-$m_{135}$ are arranged in such a way as to form an electromagnetic device according to this invention along the longitudinal direction specified by the axis OX. Along the OY axis, the illustrated device comprises one winding, but in some cases, two-dimensional devices according to this invention can also be formed, where the windings are set so that the magnetic moments of the windings form the desired distribution (arrangement) in two directions.

By the number of windings, the device of Fig. 13 corresponds to the device in Fig. 7 and differs only in the reverse directions of the magnetic moments of the windings. In this connection, the device of Fig. 13, as well as the device of Fig. 7, will suffer from the problem of unevenness of the magnetic field. To solve this problem, more windings can be used, as shown in Fig. 14 and 15.

Fig. 14 illustrates a sectional view of the device, where the directions of the current flow are shown on windings 141-147: the dot means the current directed towards the observer, and the cross signifies that the current is directed from the observer. Fig. 15 is a plan view of the same device, where currents are also displayed using arrows. The directions of the magnetic moments $m_{141}$-$m_{147}$ in Fig. 14 are defined by the screwdriver rule. The electromagnetic system of Fig. 14 is located at a height h above the conductive surface 140. Fig. 15 shows that, due to the elongated shape of the windings 141-147, the device covers most of the area of the conductive surface 140.

An additional advantage of the device in the latter embodiment is that the device is compact as a whole, since the distribution of the magnetic field over the area is achieved with a relatively small thickness of the device in height in a vertical direction (perpendicular to the longitudinal and transverse directions). The height of the assembly will depend on the thickness of the windings of the first group, and also on the height of the windings of the second group, which are located predominantly in the vertical direction. The height of the windings of the second group can be made as corresponding to the thickness of the windings of the first group, and hence the thickness of the entire assembly of windings (device) will correspond to the thickness of the windings of the first group. Thus, thanks to this flat structure of the device, compactness can be achieved by providing a strong magnetic field distributed over the area, this field being observed only on one side of the device. Simultaneously, the material consumption is reduced and the weight of the device is reduced, because electromagnets have no cores.

In view of the fact that strong currents must be passed to form strong magnetic fields, large forces (according to the Ampere law) can act between the opposite sides of the same winding and between adjacent sides of adjacent and close windings. To avoid deformation of windings, they can be mechanically fastened in the electromagnet, a part of which they can be, and electromagnets can be interconnected. In particular, the electromagnets of the first group of electromagnets (windings) can be interconnected and/or the electromagnets of the second group of electromagnets (windings) can be connected to electromagnets of the first group of electromagnets (windings).

The windings of the second group can be arranged variously in a direction perpendicular to the plane, in which the windings of the first group are located. Fig. 11 illustrates an embodiment, where the geometric centers of windings 112 and 114 of the second group can be located in the plane of the windings of the first group (for example, in the plane of the winding 113). In such cases, between the different sections of the windings of the first and second groups, depending on the directions of the currents, there will be a multi-directional forces acting, which can have approximately the same values. In the same embodiments, where the windings of the second group are located between the windings of the first group, so that a winding of the second group is located between the windings of the first group, with the orientation of the magnetic moments in accordance with this invention, the currents in the adjacent sections of the windings of the first and second groups will be co-directional, that is, the force of attraction will, hence, act between them according to the Ampere's force law Such an embodiment is shown in Fig. 14, where one can see that the currents on the adjacent sections of the triples of the windings (141,142,143), (143,144,145) and (145,146,147) coincide in direction for each triple. Due to this, the requirements for fastening fittings can be reduced in a number of cases, since the repulsive forces will be significantly less due to the fact that the sections of the windings with multi-directional currents are remoted.

In some embodiments, some or all of the windings of any of the above discovered device can be implemented as superconductive. With this purpose, they can be cooled till the superconductivity effect occurs, for example, by placing it in a container with liquid nitrogen or helium. This will provide stronger asymmetric magnetic fields that can be easily reoriented.

Any of the discovered embodiments of the electromagnetic device in accordance with this invention can be used in various fields of engineering. One of the primary applications of such assemblies is the ability to form magnetic fields controlled by magnitude and direction, transport systems with magnetic levitation. In particular, the assemblies according to this invention can be applied in a underpass for a vehicle that moves using magnetic levitation. In such a underpass, devices can be used to create a magnetic field near the underpass, which provides lift for the vehicle, allowing it to levitate over the underpass. For this purpose, the devices may be arranged in such a way that the longitudinal plane of the device, with which the magnetic moments of the windings of the device form angles in the range up to ±45° or 180° with deviations of up to ±45°, makes an angle from -45° to 45° or 180° with deviations of up to ±45° with the direction of travel of the vehicle, and in the preferred embodiment, the longitudinal plane (which is parallel to the horizontal plane XOY in Fig. 4) of the assembly (device) is parallel to the direction of travel of the vehicle.

Devices in accordance with this invention can also be mounted on a vehicle intended for traveling along a underpass with use of magnetic levitation. The devices can be used in the magnetic suspension integrated in the vehicle. Devices in a magnetic suspension are used to create a magnetic field near the vehicle, providing lift for the vehicle relative to the underpass, allowing the vehicle to levitate over it. In order for the magnetic field to provide levitation, the devices can be arranged in such a way that the longitudinal plane of the device, with which the magnetic moments of the device windings form angles from -45° to 45° or 180° with deviations of up to ±45°, makes an angle from -45° and 45° or 180° with deviations up to ±45° with the direction of travel of the vehicle along the underpass. In a preferential embodiment, the plane of the device is parallel to the direction of travel of the vehicle along the underpass. In this case, the underpass for providing levitation must have a ferromagnetic guide and/or a conductive surface.

**Claims**

1. Electromagnetic device comprising electric windings oriented relative to each other in such a way that the magnetic moments of the adjacent electrical windings are not colinear.

2. The device according to claim 1, **characterized in that** the device comprises at least three windings, wherein the vector products of the magnetic moments of the adjacent windings are directed to the same side from the plane determined by the magnetic moments of any pair of adjacent windings.

3. The device according to claim 1, **characterized in that** the radius of curvature of the inner turns of the winding is not less than 10%, 20%, 30%, 40%, or 50% of the characteristic size of the closed curve describing the inner turns of the winding.

4. The device according to claim 1, **characterized in that** at least a part of the windings has an elongated shape in a plane perpendicular to the plane formed by the magnetic moments of any pair of adjacent windings.

5. The device according to claim 1, **characterized in that** the windings are mechanically interconnected in those sections, which feature the same directions of electric current.

6. A underpass for a vehicle that moves by using magnetic levitation, comprising at least one electromagnetic device according to any of claims 1-5.

7. A vehicle intended for traveling over the underpass with the use of magnetic levitation, a part of which composition is a magnetic suspension comprising at least one electromagnetic device according to any of claims 1-5.

8. The vehicle according to claim 7, **characterized in that** the underpass comprises a ferromagnetic guide and/or a conductive surface.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

## INTERNATIONAL SEARCH REPORT

| | International application No. |
|---|---|
| | PCT/RU 2015/000828 |

**A.    CLASSIFICATION OF SUBJECT MATTER**

B60L 13/04 (2006.01)    B61B 13/08 (2006.01)    H02N 15/00 2006.01

According to International Patent Classification (IPC) or to both national classification and IPC

**B.    FIELDS SEARCHED**

Minimum documentation searched (classification system followed by classification symbols)

B60L 13/00, 13/02, 13/04, 13/06, 13/08, 13/10, B61B 3/00, 13/00, 13/08, H02N 15/00

Documentation searched other than minimum documentation to the extent that such documents are included in the fields searched

Electronic data base consulted during the international search (name of data base and, where practicable, search terms used)

DWPI, Espacenet, PatSearch (RUPTO internal), RUPAT

**C.    DOCUMENTS CONSIDERED TO BE RELEVANT**

| Category* | Citation of document, with indication, where appropriate, of the relevant passages | Relevant to claim No. |
|---|---|---|
| X<br>A | RU 2199451 C2 (SYKTYVKARSKII LESNOI INSTITUT SANKT-PETERBURGSKOI LESOTEKHNICHESKOI AKADEMII) 27.02.2003, abstract, fig. 1, p. 3, line 50 - p. 4, line 20 | 1-3, 5-6<br>4 |
| X | SU 1520793 A1 (VSESOIUZNYI NAUCHNO-ISSLEDOVATELSKII I PROEKTNO-IZYSKATELSKII INSTITUT TRUBOPROVODNOGO GIDROTRANSPORTA) 07.04.1993, abstract, fig. 1, col. 3-4 | 1, 7-8 |
| E | RU 2579416 C1 (AKTSIONERNOE OBSHCHESTVO "NIIEFA IM. D.V. EFREMOVA") 10.04.2016, the claims | 1-8 |
| A | US 4273054 A (JAPANESE NATIONAL RAILWAYS) 16.06.1981, abstract, fig. 1-13 | 1-8 |
| A | US 3871301 A (MASSACHUSETTS INSTITUTE OF TECHNOLOGY) 18.03.1975, abstract, claims, fig. 1-6 | 1-8 |

☐   Further documents are listed in the continuation of Box C.          ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 August 2016 (10.08.2016) | 29 September 2016 (29.09.2016) |
| Name and mailing address of the ISA/ | Authorized officer |
| | |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202847462

**Non-patent literature cited in the description**

- **LINNIK YU.V.** *The least squares method and the fundamentals of the mathematical-statistical theory of processing of observations,* 1962